# EUROPÄISCHE PATENTSCHRIFT

(11) **EP 0 161 395 B1**
(45) Veröffentlichungstag und Bekanntmachung des Hinweises auf die Patenterteilung: **31.03.1993**
(21) Anmeldenummer: 85101675.8
(22) Anmeldetag: 15.02.1985
(51) Int. Cl.: C05G 3/00

(54) **Blattdüngemittel zur gezielten Blattlangzeitapplikation**
Leaf fertilizer having a controlled, long lasting activity
Engrais foliaire à activité contrôlée de longue durée

(30) Priorität: 07.05.1984 DE 3417133
(43) Veröffentlichungstag der Anmeldung: 21.11.1985
(73) Patentinhaber: SCHERING AKTIENGESELLSCHAFT, 13342 Berlin (DE)
(72) Erfinder: Eibner, Robert, Dr., D-4010 Hilden (DE); Kohl, Wilhelm, Dr., D-4047 Dormagen 11 (DE); Kloth, Bernhard, Dr., D-5000 Köln 30 (DE); Jaschkowitz, Michael, D-4154 Tönisvorst 1, Ortsteil Tönif (DE); Schroeder, Michael, Dr., D-4044 Kaarst 1 (DE)

(56) Entgegenhaltungen:
- AU-A- 522 510
- DE-A- 2 217 047
- FR-A- 1 055 421
- FR-A- 1 514 059
- GB-A- 741 378
- GB-A- 1 271 575
- US-A- 3 131 048
- US-A- 4 169 716

## Beschreibung

Die Erfindung betrifft ein Blattdüngemittel zur Blattlangzeitapplikation, welches neben Haupt- und Spurennährstoffen Puffergemische enthält, sowie dessen Verwendung.

Es ist bekannt, verdünnte Mineralsalzlösungen durch Applikation auf die extraradikalen Teile von Pflanzen als Zusatznahrung für diese Pflanzen zu verwenden. Diese Mineralsalzlösungen enthalten in der Regel noch Zusätze, die die Applikation verbessern helfen, wie z.B. Trägerstoffe wie Calcium- oder Magnesiumcarbonat (GB 741.378), Metallchelate wie Eisen-, Zink- und Manganglycolat (U.S.P. 3.131.048), Metall-polyhydroxy-carboxylate (AU 22.510), Magnesiumdiammoniumphosphat zusammen mit Formaldehydharnstoff (FR-A-1.514.059), Hüllstoffe wie Glyzerin und Gelatine (FR-A-1.055.421), das Haftmittel "CITOWETT" (DE-OS-2.217.047), Lignoverbindungen (DD 197.239) und Chelatbildner aus Sulfitablagen (DD 96.226). Allen diesen Düngemitteln ist gemeinsam, daß die Nährstoffe im wesentlichen in wasserlöslicher Form vorliegen. Diese Düngemittel sind zum Teil in flüssiger Form unter dem Begriff Suspensionsdünger bekannt geworden.

Ein Nachteil der bekannten Düngemittel ist indessen, daß Mineralsalzlösungen von bestimmten Konzentrationsgrenzen an toxisch wirken können, da die verschiedenen Kulturpflanzen eine unterschiedliche Verträglichkeit gegenüber verschiedenartigen Salzkonzentrationen aufweisen.

Aufgabe der vorliegenden Erfindung ist die Bereitstellung eines Blattdüngemittels, mit dem kulturspezifische Nährstoffe auf der Oberfläche von extraradikalen Pflanzenteilen deponiert werden können, deren Löslichkeit die Verträglichkeitsgröße der jeweiligen Kultur nicht überschreitet und die gleichzeitig in der Lage sind, einen für diese Kultur verträglichen pH-Bereich langanhaltend einzustellen.

Die erfindungsgemäße Aufgabe wird dadurch gelöst, daß man ein Düngemittel verwendet, das Puffergemische aus in Wasser schwerlöslichen Eisen-, Calcium, Magnesium-, Cobalt, Zink-, Moybdän-, Kupfer- oder Mangansalzen der Phosphorsäure, Kohlensäure, Borsäure, Oxalsäure, Hydroxypolycarbonsäuren, Carbonsäuren, Dicarbonsäure, Fettsäuren oder Aminosäuren enthält.

Die erfindungsgemäßen Blattdünger ermöglichen in bisher nicht erreichter Weise eine gezielte Blattlangzeitapplikation bei gleichzeitiger Regulierung des pH-Bereichs auf den Blättern. Sie lösen daher ein dringendes Bedürfnis des Umweltschutzes.

Die erfindungsgemäßen Blattdünger bilden in Wasser und/oder wäßrigen Lösungsmitteln Feststoffdispersionen von Puffergemischen, welche ihre Wirkung durch Abfangen von Wasserstoff- bzw. Hydroxid-ionen entfalten.

Ihre Haftfestigkeit auf den Blättern können` sie zweckmäßigerweise durch sehr feines Vermahlen und/oder durch Erzeugung sehr feiner Fällungsniederschläge erhalten. Erfindungsgemäß innen sie zusätzlich auch lösliche oder Unlösliche Haftmittel und feuchtigkeitsbeeinflussende Substanzen enthalten, wodurch ihre Haftung verstärkt und Auswaschungen durch Wasserüberfluß vermieden bzw. geringe Feuchtigkeitsmengen aber ausgenutzt werden können.

Der den erfindungsgemäßen Blattdüngern eigene Puffercharakter läßt darüberhinaus eine reproduzierbare Einstellung eines verträglichen pH-Bereichs auf den extraradikalen Pflanzenteilen zu, was technisch überaus wertvoll ist.

So ist es möglich, über diesen Puffermechanismus bestimmte ausgewählte Nährstoffe den extraradikalen Teilen der Pflanze bei jeder natürlichen oder künstlichen Wiederbefeuchtung durch Regen oder Bewässerung in einer nicht toxischen Konzentration über einen längeren Zeitraum zur Verfügung zu stellen.

Zusätzlich schaffen die gekennzeichneten Puffergemische die Möglichkeit, schädliche H⁺-Ionenkonzentrationen, zum Beispiel als Folge saurer Niederschläge, so abzustumpfen, daß sich verträgliche pH-Werte über einen längeren Zeitraum einstellen.

Das erfindungsgemäße Blattdüngemittel kann als Nährstoffe Kohlenstoff, Sauerstoff, Stickstoff, Phosphor, Kalium, Magnesium Calcium, Schwefel, Eisen, Mangan, Kupfer, Zink, Chlor, Bor, Molybdän, Natrium, Silicium, Kobalt und/oder Aluminium, vorzugsweise in gebundener Form, enthalten.

Es hat sich als besonders vorteilhaft erwiesen, wenn diese Nährstoffe gebunden als Hydroxide, Phosphate, Carbonate, Silicate, Oxalate, Borate, Molybdate, Salze von polymeren Säuren, Huminsäuren, Aminosäuren, Chelatbildnern, Ligninsulfonsäuren, Eiweißfraktionen, Aminosäuren, Zuckersäuren, Alginsäuren, Kohlensäurederivaten, Caseinsäuren, Fettsäuren, Hydroxypolycarbonsäuren, deren Hydrogenverbindungen und Mischpräzipitaten vorliegen, und damit ein reversibles Nährstoffangebot aufweisen.

Sofern ein weitgehend H⁺-Ionenkonzentrationsunabhängiges Nährstoffdepot gewünscht wird, werden erfindungsgemäß Nährstoffe eingesetzt, die gebunden als Sulfate vorliegen.

Im Falle eines irreversiblen Nährstoffangebots werden die Nährstoffe weiterhin in Form ihrer Metalle, Oxide, Harnstoffderivate der Melamine oder umhüllt mit oder eingebaut in Matrizen aus Alkydharzen, Polyacrylaten, Cellulosederivaten, synthetischen Polymeren, Wachsen, Zuckern, Gelatinen, Stearaten, Palmitaten, Oleaten, Fetten, Fettalkoholen, Schwefel oder Paraffinen vorliegen, verwendet.

Die erfindungsgmäßen Puffergemische sind für einen nutzbaren pH-Bereich von 1,0 bis 8,0, vorzugsweise von 3,0 bis 6,0, ausgelegt.

Die Haftfestigkeit der erfindungsgemäßen Blattdüngemittel kann durch den Zusatz löslicher oder unlöslicher Haftmittel gesteigert werden, von denen insbesondere die folgenden zu nennen sind:

Synthetische Copolymerisate, Acrylate, Stärkehydrolysate, Proteinhydrolysate, Aminate, Caseinate, Cellulose, Aminosäuren, Gummi arabicum Weizenmehl, Polyvinylacetate, Polyvinylalkoholate, Cetylalkohol, Latex, Melasse, Gelatine, Polyglykole und Zucker.

Die Regelung des Nährstoffangebots auf dem Blatt läßt sich weiterhin übetraschenderweise verbessern, wenn man dem erfindungsgemäßen Blattdüngemittel feuchtigkeitsbeeinflussende Substanzen hirzugefügt, zum Beispiel imprägnierende Substanzen zur Reduzierung von Auswaschungen durch Wasserüberfluß, wie Öle, Wachse, Fette oder Silicone, oder humidifizierende Substanzen zur Ausnutzung geringer Flüssigkeitsmengen, wie Tenside, Glykole oder Kollagen.

Als weitere vorteilhafte Zusätze sind schließlich H⁺-Ionendonatoren zu nennen, wie zum Beispiel Carbonsäure, insbesondere Ethylendiamintetraessigsäure oder Glyoxylsäure. Ein besonderer Vorteil ist es, daß durch Anwendung des erfindungsgemäßen Blattdüngemittels Schäden in erkrankten Wäldern infolge von Schadstoffbelastungen kurzfristig gemindert, ein weiteres Fortschreiten verhindert und im Zusammenwirken mit Maßnahmen der Bodendüngung und Melioration eine Vitalisierung zur Stabilisierung der Bestände erreicht werden kann.

Das erfindungsgemäße Düngemittel löst vorteilhafterweise auch das Problem, die sogenannte Apfelstippe, die durch einen lokalen Calciummangel in der Frucht entsteht, zu verhindern, was durch Calcium-Gaben über den Boden nicht möglich ist.

Das erfindungsgemäße Blattdüngemittel läßt sich weiterhin besonders vorteilhaft zur Standortspezifischen Blattdüngung in den Fällen anwenden, wenn die Pflanze aufgrund besonderer Standortverhältnisse, wie ungünstige pH-Werte im Boden, Nährstoffe nicht oder in nicht ausreichendem Masse über dem Boden aufnehmen kann.

Weiterhin löst das erfindungsgemäße Blattdüngemittel das Problem der kulturspezifischen Blattdüngung, und zwar dann, wenn die jeweilige Kultur spezielle Anforderungen an die Ernährung stellt. Beispielsweise sei hier die Blattdüngung im Mais-Anbau erwähnt, wo Nährstoffmangel weit verbreitet ist und besonders häufig in der Jugend auftritt. Hierbei handelt es sich vorwiegend um Phosphor-, Magnesium und Zink-Mangel, Erscheinungen, die auch oft als Kältechlorosen bezeichnet werden. Als wärmeliebende Pflanze ist nämlich der Mais bei ungünstigem Klima oft nicht in der Lage, entsprechend Nährstoffe aus dem Boden aufzunehmen, was jedoch durch Applikation des erfindungsgemäßen Blattdüngemittels in vollem Masse unter Vermeidung von Einbußen mehr als ausgeglichen werden kann.

Einige weitere Anwendungsmöglichkeiten sind aus den Beispielen ersichtlich
Die Herstellung des erfindungsgemäßen Blattdüngemittels erfolgt in an sich bekannter Weise, zum Beispiel, indem man die Nährstoffe, das Puffergemisch und die Zusatzstoffe in einem für die jeweilige Art der Behandlung geeigneten Aggregat, wie zum Beispiel einer Drehtrommel, oder einem Granulierteller oder einem Wirbelschichtgerät, miteinander vermischt oder in einem geeigneten Aggregat, wie zum Beispiel einer Drehtrommel oder einem Granulierteller, vorlegt und das in seiner Nährstoffreisetzung erfindungsgemäß zu beeinflussende Düngemittel derart einträgt, daß das Düngemittel vollständig und ausreichend gleichmäßig mit der gewünschten Schicht umhüllt wird.

Der Anteil der Puffergemische im erfindungsgemäßen Blattdüngemittel kann in weiten Grenzen variieren.

Zweckmäßigerweise werden die Puffergemische in Konzentrationen von 10 bis 90 Gewichtsprozent, vorzugsweise von 20 bis 80 Gewichtsprozent, eingesetzt.

Das erfindungsgemäße Blattdüngemittel kann vorteilhafterweise auch in Mischung mit Pflanzenschutzmitteln angewendet werden.

Die Anwendung erfolgt in an sich bekannter Weise, beispielsweise auch mittels Luftapplikation.

Die folgenden Beispiele beschreiben erfindungsgemäße Blattdüngemittel beziehungsweise deren Verwendung.

### BEISPIEL 1

41,4 Gewichtsprozent Magnesiumcarbonat MgC0₃
6,2 Gewichtsprozent Magnesiumsulfat MgSO4 . 7H₂0
2,1 Gewichtsprozent Calciumcarbonat CaCO₃
1,4 Gewichtsprozent Dicalciumphosphat CaHPO₄ . 2H₂0
15,0 Gewichtsprozent Glukosesirup
1,5 Gewichtsprozent Natriumbenzoat
4,0 Gewichtsprozent Kaliumnitrat
1,5 Gewichtsprozent Attapulgit
0,3 Gewichtsprozent Spurennährstoffe B,Cu,Co,Mn,Mo,Zn in Form ihrer Oxyde oder Carbonate
26,6 Gewichtsprozent Wasser

### BEISPIEL 2

24,1 Gewichtsprozent Eisenphosphat FePO₄ . 2H₂0
0,3 Gewichtsprozent Eisensulfat FeSO₄
4,3 Gewichtsprozent Styrol-Butadien-Dispersion
4,3 Gewichtsprozent Proteinhydrolysat
15,6 Gewichtsprozent Glukosesyrup
1,3 Gewichtsprozent Attapulgit
0,9 Gewichtsprozent Ammonnitrat
0,7 Gewichtsprozent Harnstoff
48,5 Gewichtsprozent Wasser

### BEISPIEL 3

24,1 Gewichtsprozent Eisenphosphat FePO₄ . 2H₂0
0,3 Gewichtsprozent Eisensulfat FeSO₄
4,3 Gewichtsprozent Styrol-Butadien-Dispersion
4,3 Gewichtsprozent Proteinhydrolysat
15,6 Gewichtsprozent Glukosesyrup
1,3 Gewichtsprozent Attapulgit
0,25 Gewichtsprozent Äthylendiamintetraessigsäure
0,9 Gewichtsprozent Ammonnitrat
0,7 Gewichtsprozent Harnstoff
48,25 Gewichtsprozent Wasser

### BEISPIEL 4

24,1 Gewichtsprozent Eisenphosphat FePO₄ . 2H₂0
0,3 Gewichtsprozent Eisensulfat FeSO₄
4,3 Gewichtsprozent Styrol-Butadien-Dispersion
4,3 Gewichtsprozent Proteinhydrolysat
15,6 Gewichtsprozent Glukosesyrup
1,3 Gewichtsprozent Attapulgit
0,5 Gewichtsprozent Äthylendiamintetraessigsäure
0,9 Gewichtsprozent Ammonnitrat
0,7 Gewichtsprozent Harnstoff
48,0 Gewichtsprozent Wasser

### BEISPIEL 5

29,0 Gewichtsprozent Eisenphosphat FePO₄ . 2H₂0
1,8 Gewichtsprozent Eisen-äthylendiamintetraacetat
10,0 Gewichtsprozent Glukosesyrup
0,5 Gewichtsprozent Natriumbenzoat
1,5 Gewichtsprozent Attapulgit
57,2 Gewichtsprozent Wasser

### BEISPIEL 6

29,0 Gewichtsprozent Eisenphosphat
1,8 Gewichtsprozent Eisen-äthylendiamintetraacetat
10,0 Gewichtsprozent Glukosesyrup
0,5 Gewichtsprozent Natriumbenzoat
1,5 Gewichtsprozent Attapulgit
0,7 Gewichtsprozent Glyoxylsäure
56,5 Gewichtsprozent Wasser

### BEISPIEL 7

Einfluss von pH-regulierenden Blattlangzeitdüngerapplikationen auf Assimilationsfläche und Frischgewicht
Es werden Pflanzen behandelt, die durch die Anzucht vor der Blattapplikation bezüglich des geprüften Nährelements ungenährt blieben.
Die Behandlung erfolgte mit dem erfindungsgemäßen Blattdüngemittel gemäß Beispiel 1.
Es wurden umgerechnet 6000 mg Magnesium/Liter über die Blätter 14 Tage nach dem Topfen appliziert.
Die Ernte erfolgte 24 Tage nach dem Topfen.
DerpH-Wert der Blätter wurde durch Betauung auf den zu prüfenden Wert eingestellt.
Als Kulturpflanze wurde die Buschbohne "Marona" geprüft.
Als Substrat wurden Polyurethan Flocken mit einem magnesiumfreien Nährlösungsanstau eingesetzt.

Die folgende Tabelle zeigt die erhaltenen Befunde, aus denen die starke Abnahme der Chlorose und der große Anstieg des Frischgewichts im Vergleich zur unbehandelten Kontrolle ersichtlich ist.

| Erfindungsgemäßes Blattdüngemittel | pH-Wert extern der Blattoberfläche | Intercostalchlorose | | Frischgewicht | |
|---|---|---|---|---|---|
| | | absolut * | relativ | g | % |
| Zusammensetzung gemäß Beispiel 1 | 5,0 | 48 | 75 | 31,3 | 113 |
| | 2,0 | 45 | 70 | 31,9 | 116 |
| Kontrolle (unbehandelt) | 5,0 | 64 | 100 | 27,6 | 100 |
| | 2,0 | 65 | 101 | 26,3 | 95 |

| | | | | | |
|---|---|---|---|---|---|
| * in % zur Gesamtblattfläche | | | | | |

### BEISPIEL 8

Einfluss von pH-regulierenden Blattlangzeitdüngerapplikationen auf Frischgewicht
Es wurden Pflanzen behandelt, die durch die Anzucht vor der Blattapplikation bezüglich des geprüften Nährelements ungenährt blieben.
Die Behandlung erfolgte mit dem erfindungsgemäßen Blattdünger gemäß Beispiel 2.
Es wurden umgerechnet 2000 mg Eisen/Liter über die Blätter 10 Tage nach dem Topfen appliziert.
die Ernte erfolgte 22 Tage nach dem Topfen.

Als Kulturpflanze wurde die Buschbohne "Marona " geprüft. Als Substrat wurden Polyurethanflocken mit einem eisenfreien Nährlösungsanstau eingesetzt.

Die folgende Tabelle zeigt die erhaltenen Befunde, aus denen der große Anstieg des Frischgewichts im Vergleich zur unbehandelten Kontrolle ersichtlich ist.

| Erfindungsgemäßes Blattdüngemittel | Frischgewicht | |
|---|---|---|
| | g | % |
| Zusammensetzung gemäß Beispiel 2 | 20,6 | 100 |
| Kontrolle (unbehandelt) | 19,8 | 96 |

### BEISPIEL 9

Einfluss von pH-regulierenden Blattlangzeitdüngerapplikationen auf Frischgewicht.

Das Beispiel 8 wurde wiederholt unter Verwendung des erfindungsgemäßen Blattdüngemittels gemäß Beispiel 3.

Die Befunde sind aus der folgenden Tabelle ersichtlich.

| Erfindungsgemäßes Blattdüngemittel | Frischgewicht | |
|---|---|---|
| | g | % |
| Zusammensetzung gemäß Beispiel 3 | 23,0 | 112 |
| Kontrolle (unbehandlet) | 19,8 | 96 |

### BEISPIEL 10

Einfluss von pH-regulierenden Blattlangzeitdüngerapplikationen auf Frischgewicht.

Das Beispiel 8 wurde wiederholt unter Verwendung des erfindungsgemäßen Blattdüngemittels gemäß Beispiel 4.

Die Befunde sind aus der folgenden Tabelle ersichtlich.

| Erfindungsgemäßes Blattdüngemittel | Frischgewicht | |
|---|---|---|
| | g | % |
| Zusammensetzung gemäß Beispiel 4 | 23,3 | 113 |
| Kontrolle (unbehandelt) | 19,8 | 96 |

### BEISPIEL 11

Einfluß von pH-regulierenden Blattlangzeitdüngerapplikationen auf Frischgewicht.

Es wurden Pflanzen behandelt, die durch die Anzucht vor der Blattapplikation bezüglich des geprüften Nährelements ungenährt blieben.

Die Behandlung erfolgte mit dem erfindungsgemäßen Blattdüngemittel gemäß Beispiel 5. Es wurden umgerechnet 3000 mg Eisen/Liter über die Blätter 19 Tage nach dem Topfen appliziert. Die Ernte erfolgte 39 Tage nach dem Topfen.

Als Kulturpflanze wurde die Buschbohne "Marona" geprüft. Als Substrat wurden Polyurethanflocken mit einem eisenfreien Nährlösungsanstau eingesetzt.

Die folgende Tabelle zeigt die erhaltenen Befunde, aus denen der große Anstieg des Frischgewichts im Vergleich zur unbehandelten Kontrolle ersichtlich ist.

| Erfindungsgemäßes Blattdüngemittel | Frischgewicht | |
|---|---|---|
| | g | % |
| Zusammensetzung gemäß Beispiel 5 | 48,8 | 110 |
| Kontrolle (unbehandelt) | 44,5 | 100 |

### BEISPIEL 12

Einfluss von pH-regulierenden Blattlangzeitdüngerapplikationen auf Frischgewicht.

Das Beispiel 11 wurde wiederholt unter Verwendung des erfindungsgemäßen Blattdüngemittels gemäß Beispiel 6.

Die Befunde sind aus der folgenden Tabelle ersichtlich.

| Erfindungsgemäßes Blattdüngemittel | Frischgewicht | |
|---|---|---|
| | g | % |
| Zusammensetzung gemäß Beispiel 6 | 54,0 | 121 |
| Kontrolle (unbehandelt) | 44,5 | 100 |

## Patentansprüche

1. Blattdüngemittel zur Blattlangzeitapplikation enthaltend Haupt- und Spurennährstoffe sowie Puffergemische, dadurch gekennzeichnet, daß die Puffergemische aus in Wasser schwerlöslichen Eisen-, Calcium-, Magnesium-,Cobalt-, Zink-, Molybdän-, Kupfer- oder Mangansalzen der Phosphorsäure, Kohlensäure, Borsäure, Oxalsäure, Hydroxypolycarbonsäuren, Carbonsäuren, Dicarbonsäuren, Fettsäuren oder Aminosäuren bestehen.

2. Blattdüngemittel gemäß Anspruch 1, dadurch gekennzeichnet, daß die Puffergemische einen nutzbaren pH-Bereich von 1 bis 8, vorzugsweise von 3 bis 6, aufweisen.

3. Blattdüngemittel gemäß Anspruch 1, dadurch gekennzeichnet, daß es zusätzlich Haftmittel enthält.

4. Blattdüngemittel gemäß Anspruch 3, dadurch gekennzeichnet, daß es als Haftmittel synthetische Copolymerisate, Acrylate, Stärkehydrolysate, Proteinhydrolysate, Alginate, Caseinate, Cellulose, Aminosäuren, Gummi arabicum, Weizenmehl, Polyvinylalkoholate, Ceteylalkoholate, Latex, Melasse, Gelatine, Polyglykole und/oder Zucker enthält.

5. Blattdüngemittel gemäß Anspruch 1, dadurch gekennzeichnet, daß es zusätzlich feuchtigkeitsbeeinflussende Substanzen enthält.

6. Blattdüngemittel gemäß Anspruch 5, dadurch gekennzeichnet, daß es als feuchtigkeitsbeinflussende Substanzen Öle, Wachse, Fette, Silicone, Tenside, Glykole und/oder Kollagen enthält.

7. Blattdüngemittel gemäß Anspruch 1, dadurch gekennzeichnet, daß es zuzätzlich einen H-Ionendonator, vorzugsweise eine Carbonsäure, insbesondere Ethylendiamintetraessigsäure oder Glyoxylsäure enthält.

8. Verwendung des Blattdüngemittels gemäß Anspruch 1 zur Verhinderung der Apfelstippe.

9. Verwendung von Blattdüngemitteln gemäß Anspruch 1 zur Verhinderung von Kältechlorosen, insbeondere bei Maispflanzen.

10. Verwendung von Blattdüngemitteln gemäß Anspruch 1 zur Verhinderung von Schäden an Nadel- und Laubhölzern infolge sauren Regens.

## Claims

1. Leaf fertilizer for long-term leaf application containing major and trace nutrients and buffer mixture means aswell, wherein the buffer mixture means is provided in the form of iron, calcium, magnesium, cobalt, zinc, molybdenum, copper or manganese salts of phosphoric acid, carbonic acid, boric acid, oxalic acid, hydroxypolycarboxylic acids, carboxylic acids, dicarboxylic acids, fatty acids or amino acids difficultly soluble in water.

2. Leaf fertilizer according to claim 1, wherein said buffer mixture means display a useful pH range between 1 and 8, preferably between 3 and 6.

3. Leaf fertilizer according to claim 1, further comprising adhesive means.

4. Leaf fertilizer according to claim 1, wherein said adhesive means contain synthetic copolymerisates, acrylates, starch hydrolysates, protein hydrolysates, alginates, caseinates, cellulose, amino acids, gum arabic, wheatmeal, polyvinyl alcoholates, cetylalcoholates, latex, molasses, gelatin, polyglycoles and/or sugar.

5. Leaf fertilizer according to claim 1, further comprising moisture-influencing means.

6. Leaf fertilizer according to claim 5, said moisture-influencing means are selected from oils, waxes, fats, silicons, tensides, glycols and/or collagen.

7. Leaf fertilizer according to claim 1, further comprising additionally an H-ion donator, preferably a carboxylic acid, most preferably ethylene diamine tetraacetic acid or glyoxylic acid.

8. Use of the leaf fertilizer according to claim 1 for the prevention of apple speck.

9. Use of the leaf fertilizer according to claim 1 for the prevention of cold chloroses, particularly with corn stock.

10. Use of the leaf fertilizer according to claim 1 for the prevention of injuries in needle and leaf woods resulting from acid rain.

## Revendications

1. Engrais ou fertilisant pour des applications sur feuilles de longue durée, comprenant aliments principaux et oligo-éléments avec des mélanges de tamponnage, caractérisé en ce que les mélanges de tamponnage sont formés de sels peu solubles dans l'eau, de fer, calcium, magnésium, cobalt, zinc, molybdène, cuivre ou manganèse, de l'acide phosphorique, carbonique, borique, oxalique, d'acides hydroxy-polycarboxylique, d'acides carboxyliques ou dicarboxylique's, d'acides gras ou d'amino-acides,

2. Engrais selon la revendication 1, caractérisé en ce que les mélanges de tamponnage ont un pH applicable de 1 à 8, de préférence de 3 à 6.

3. Engrais selon la revendication 1, caractérisé en ce qu'il contient en outre un adhésif.

4. Engrais selon la revendication 3, caractérisé en ce que l'adhésif est pris parmi des copolymères synthétiques, acrylates, hydrolysats d'amidon ou de protéines, alginates, caséinates, cellulose, amino-acides, gomme arabique, farine de froment, alcoolates polyvinyliques, alcoolates cétéyliques, latex, mélasses, gélatines, polyglycols et/ou sucres.

5. Engrais selon la revendication 1, caractérisé en ce qu'il contient en outre des substances ayant un effet sur l'humidité.

6. Engrais selon la revendication 5, caractérisé en ce que les substances à effet sur l'humidité sont des huiles, cires, matières grasses, silicones, agents tensio-actifs, glycols et/ou du collagène.

7. Engrais selon la revendication 1, caractérisé en ce qu'il contient en outre un donneur d'ions H, de préférence un acide carboxylique et en particulier de l'acide éthylène-diamine-tétracétique ou glyoxylique.

8. Emploi d'un engrais selon l'une quelconque des revendications précédentes pour empêcher la maladie des taches amères de la pomme.

9. Emploi d'un engrais selon l'une quelconque des revendications précédentes pour empêcher des chloroses au froid, notamment de plants de maïs.

10. Emploi d'un engrais selon l'une quelconque des revendications précédentes pour empêcher l'endommagement d'arbres à aiguilles ou à feuilles caduques à la suite de pluies acides.
